(19)

Europäisches Patentamt
European Patent Office
Office européen des brevets

(11) **EP 1 814 083 A1**

(12) **EUROPEAN PATENT APPLICATION**

(43) Date of publication:
**01.08.2007 Bulletin 2007/31**

(51) Int Cl.:
*G06T 7/00* (2006.01)   *G01C 11/06* (2006.01)

(21) Application number: **07001922.9**

(22) Date of filing: **29.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.01.2006 JP 2006022295**

(71) Applicant: **OMRON CORPORATION**
**Kyoto-shi, Kyoto 600-8530 (JP)**

(72) Inventors:
• **Kato, Yutaka**
**Omron Corporation**
**Shimogyo-ku**
**Kyoto-shi**
**Kyoto 600-8530 (JP)**

• **Ikeda, Yasuyuki**
**Omron Corporation**
**Shimogyo-ku**
**Kyoto-shi**
**Kyoto 600-8530 (JP)**

(74) Representative: **Kilian, Helmut**
**Wilhelms, Kilian & Partner**
**Patentanwälte**
**Eduard-Schmid-Strasse 2**
**81541 München (DE)**

(54) **Photometric measurements using at least three light sources**

(57)     There are provided an image processing method and an image processor for detecting an object to be detected in a simple and accurate manner without detailed adjustment of illumination.

Light sources provided in at least three directions around a camera are sequentially lighted, and a camera is driven every time the one of the light sources is lighted to generate images of a work. Further, a normal vector of a group of pixels having the same coordinate among the generated images is calculated by use of brightness of each pixel that belongs to the group and a previously obtained illumination direction vector corresponding to each of the light sources. Moreover, the normal vector of each pixel is converted into one-dimensional information showing a relation of the vector with respect to a space coordinate system, and after generation of an image representing the calculation result, a prescribed characteristic extracting process is executed.

Fig. 3A

EP 1 814 083 A1

**Description**

BACKGROUND OF THE INVENTION

1. Field of the Invention

The present invention relates to image processing which is executed, in the case of executing processes such as measurement and testing on a prescribed object, as a process prior to those processes.

2. Description of Related Art

There are many cases where adjustment of illumination is necessary when a surface state of an object is recognized by two-dimensional image processing. For example, in the case of detecting a depression on the surface of an object, it is necessary to provide such illumination as to make the depression darker than other portions. Further, in the case of detecting a letter, a figure or the like, printed on the surface of an object with an uneven surface, it is necessary to select a direction as well as the kind of illumination so as to make the whole surface uniformly lighted.

On the other hand, a method called a photometric stereo method has been provided as a method for recognizing a cubic shape of an object. This method is to fixedly arrange a camera, while changing the direction of illumination, against an object to be recognized so as to calculate a normal vector or a reflectivity against the object surface by use of the brightness of a plurality of generated images.

Here, the principle of the photometric stereo method is briefly described.

Providing that the surface of the object to be recognized is completely a diffusion surface, the brightness to be observed on the object surface in the case of illuminating the object by a light source placed at a prescribed position changes depending upon the relation between a normal line of the surface and an incident angle of the illuminated light (Lambert's law). Specifically, the direction of incidence of the illuminated light is represented by a vector L* (hereinafter referred to as illumination direction vectors vector L*). An inclined state of the object is represented by a normal vector n*. When a reflectivity of the object is R, and a distance from the light source to the object surface is D, the brightness I of the object surface by the illuminated light is expressed by the following expression (1):

$$I = (R/D^2) \cdot L^* \cdot n^* \qquad \dots (1)$$

Here, when the illumination direction vector L* is (LX, LY, LZ) and the normal vector is (nX, nY, nZ), the expression (1) can be modified into the following expression (2):

$$I \cdot D^2 = R \cdot (nX \cdot LX + nY \cdot LY + nZ \cdot LZ) \qquad \dots (2)$$

In the above, it is possible to obtain each component of the illumination direction vectors L* and the distance D from the positional relation between the light source and the object. Further, the reflectivity R is a fixed value. Therefore, when respective light sources are installed in a plurality of directions against the object, whose image is picked up in each lightning while the light sources are sequentially lighted, and brightness I at a specific position is measured for each of the light sources by means of the generated images, it is considered that an inner product $L^* \cdot n^*$ of the vector of each light source changes at the same ratio as I $\cdot D^2$. Further, in order to specify the normal vector n*, the ratio among three components nX, nY, nZ may need to be revealed.

Therefore, when at least three light sources are installed, and the above-mentioned image pickup process and the measurement process are executed using each of these light sources to obtain the brightness I, it is possible to obtain the components nX, nY, nZ of the normal vector n*. Further, it is possible to obtain the reflectivity R by substituting the calculated values of nX, nY, nZ into the expression (1).

The following document describes in detail the principle of the above-mentioned photometric stereo method. (Non-patent document 1) L. Hashemi, A. Azizi, M. Rezaeian; "The reference modeling in shape from shading"; Dept. of Geomatics Engineering, University of Tehran, Tehran, Iran; [online] searched in November 1, 2005: Internet <URL: http://www.isprs.org/istanbui2004/comm5/papers/637.pdf>

In the above-mentioned conventional two-dimensional image processing, for assuring accuracy in detection, it is necessary to appropriately set an illumination condition. However, since such setting requires wide knowledge as well as experience, it is difficult for a first-timer to set the illumination condition. There further is a problem in that even those experienced with wide knowledge are required to perform operations by trial and error for appropriately setting the illumination condition, thereby requiring enormous efforts.

On the other hand, according to the photometric stereo method, although it is possible to obtain three-dimensional data representing the surface shape of the object without precise adjustment of the illumination condition, an algorithm becomes complicated since performing a three-dimensional measurement process is necessary. This raises the possibility of a delay in the process, and prevention of such a delay requires improvement in performance of hardware. Moreover, since an algorithm developed for the conventional two-dimensional image processing cannot be applied, it is necessary to develop new software, which might also cause a steep increase in cost.

SUMMARY OF THE INVENTION

The present invention was made with focus on the above-mentioned problems, and has an object to detect an object to be detected in a simple and accurate manner without the need for detailed adjustment of illumination. Further, an object of the present invention is to make an algorithm in the conventional two-dimensional image processing applicable as it is, to eliminate the need for development of new software as well as the need for improvement in performance of hardware, so as to suppress cost.

A first image processing method of the present invention is characterized in that the following first, second and third steps are executed in a case where a process for picking up an image of an object from a fixed direction is executed at least three times while the direction of illumination against the object is changed, to obtain a normal vector against the object surface by means of a plurality of images obtained by the respective image pickups, and subsequently, a prescribed process is executed using the normal vector acquirement result.

In the first step executed are a process for obtaining the normal vector of each pixel group in a corresponding relation among the plurality of images by use of the brightness of the respective pixels and a process for obtaining one-dimensional information representing a relation of the normal vector with a space including the object. In the second step, image data is generated which makes the one-dimensional information, obtained for each pixel in the first step, correspond to a coordinate of each pixel. In the third step, a prescribed characteristic extracting process is executed on the image data generated in the second step.

In the process for obtaining the normal vector in the first step, for example, using three images generated by illumination from respectively different illumination directions, pixels in the same coordinate among the images are combined, and the brightness of each pixel belonging to each of the combined groups is applied to simultaneous equations on the basis of the above-mentioned expression (1), to calculate components $nX$, $nY$ and $nZ$ of a normal vector $n^*$. It is noted that the number of images for use in this calculation is not limited to three, but four or more images may be used.

As the one-dimensional information, for example, the length of a projection pattern in projecting the normal vector in an arbitrary direction within the space may be obtained.

It is to be noted that in the first step, the process of obtaining one-dimensional information may be executed on all pixel groups after execution of the process of obtaining a normal vector. However, the present invention is not limited to this. Each process may be executed on every several pixels.

Further, the process for determining a normal vector and the process for obtaining may be executed in succession by units of group.

In the second step, for example, variable-density image data is generated in which a numeric value indicated by the one-dimensional information is a density of each pixel. In the third step, for example, a binarization process, an edge extraction process, a pattern matching process, a variable-density data injection process (a density of each pixel is added along a prescribed direction to generate a histogram representing a density distribution), and the like.

According to the image processing method of the present invention, since one-dimensional information reflecting the characteristic of the normal vector of each pixel is obtained and image data is generated according to the information, it is possible in the third step to perform the characteristic extracting process using conventional two-dimensional image processing technique. Further, there is no need for detailed setting of an illumination condition since a normal vector can be obtained when the direction of the illumination and positions of the light sources at the time of each image pickup are known.

In one mode of the image processing method, the length of a projection pattern in projecting the normal vector in an arbitrary direction (hereinafter referred to as "reference direction") within the space is obtained as the one-dimensional information. For example, an inner product of a unit vector directed in the reference direction and the normal vector can be obtained and used as the one-dimensional information. Further, in the case of using any of three axes (X-axis, Y-axis, Z-axis) constituting a space coordinate system as the reference direction, a component (any of $nX$, $nY$, $nZ$) of the normal vector corresponding to that direction may be used as the one-dimensional information.

It is considered that the one-dimensional information of the above mode shows the similarity of the normal vectors to the reference direction. In other words, it is considered that the one-dimensional information shows the degree of inclination of the object surface against a surface with its normal vector direction taken as the reference direction (hereinafter referred to as "reference surface").

Therefore, for example when a surface having some inclination angle is an object to be detected, the length of a projection pattern of each normal vector may be obtained with the direction of the normal vector of the inclined surface taken as the reference direction, and an assembly of pixels with the obtained lengths exceeding a prescribed threshold may be detected.

In another mode of the image processing method, an angle formed by the normal vector against an arbitrary vector within the space is obtained as one-dimensional information.

For example, when an angle is obtained which is formed by a normal vector against a vector along the Y-axis on a Y-Z plane (where the Z-axis is an axis in the height direction) of the space coordinate system, the closer to zero degree the angle information, the closer to the vertical surface the object surface. Therefore, with this angle information, the inclined state of the object can be recognized.

Further, by obtaining an angle formed by a normal vector against a vector along the X-axis on a level plane (X-Y plane) of the space coordinate system, it is possible to represent the direction of the vector when seen from the top, i.e. the direction indicated by the normal vector projected on the X-Y plane. Therefore, when the object surface is inclined, the inclination direction of the inclined surface can be recognized.

It is to be noted that in the above mode, for example in the case of detecting some area with an inclination angle against the reference surface in a prescribed angle range, an angle of a normal vector against the reference vector may be obtained for each pixel, and an assembly of pixels with the obtained angles fatting in the prescribed angle range may be detected.

In another mode of the first image processing method, a step of displaying an image on the basis of the image data generated in the second step is executed. Thereby, it is possible to visually realize the surface state of the object represented by the normal vector.

Further, in the case of applying the above mode, a plurality of kinds of the one-dimensional information may be obtained in the first step, image data of each of the one-dimensional information may be generated and in the second step, and in the step of displaying an image, an image may be displayed where the image data of the one-dimensional information are respectively reflected in different components.

For example in a case where the respective axes X, Y, Z are set as reference directions and lengths nX, nY, nZ of the projection patterns of the normal vectors against the respective directions are obtained as one-dimensional information, it is possible to display a colored image where nX, nY and nZ have been replaced by color components of R, G, B, respectively. Further, also in a case where two directions are set as reference directions and angles of normal vectors against the respective directions are obtained, it is possible to display an image where the respective angles have been replaced with two components out of R, G and B.

Further, an image may be displayed where the one-dimensional information are reflected in color saturation, lightness and hue, in place of R, G and B above. Moreover, the number of displayed image is not limited to one. For example, a plurality of variable-density images may be displayed on one screen, the images separately reflecting the one-dimensional information.

Next, a second image processing method according to the present invention executes the following first, second and third steps in a case where a process for picking up an image of an object from a fixed direction is executed at least three times while the direction of illumination against the object is changed, to obtain a reflectivity of the object surface by means of a plurality of images obtained by the respective image pickups, and subsequently, a prescribed process is executed using the reflectivity acquirement result.

In the first step, a process for obtaining the reflectivity of the object for each pixel group in a corresponding relation among the plurality of images is executed by use of the brightness of the respective pixels. In the second step, image data is generated which makes the reflectivity, obtained in the first step for each pixel, correspond to a coordinate of each pixel. In the third step, a prescribed characteristic extracting process is executed on the image data generated in the second step.

In the above, in the first step, for example, a normal vector of each corresponding pixel group is obtained in the same manner as in the first step of the first image processing method, and subsequently, the calculation result is applied into the above expression (1) corresponding to a prescribed light source, to obtain a reflectivity R. In the second step, for example, variable-density image data reflecting the above reflectivity R is generated. In the third step, for example, a region where the reflectivity is within a prescribed range is extracted from the variable-density image data by a binarization process, an edge extraction process, a pattern matching process, or the like.

According to the second image processing method, it is possible to generate image data reflecting the reflectivity of the object surface can be generated without detailed adjustment of the illumination. Hence, for example in the case of detecting a region having a different reflectivity from, while having the same color as, surroundings of that region, it is possible to accurately detect a region to be detected without the need for detailed adjustment of the illumination.

In addition, in this second image processing method, an image on the basis of the image data generated in the second step may be displayed in the same manner as in the first image processing method.

Moreover, in a mode common to the first and second image processing methods, a fourth step and a fifth step are executed. The fourth step is a step of executing a prescribed measurement process with regard to the characteristic extracted in the third step. The fifth step is a step of determining whether or not the surface state of the object is appropriate on the basis of the result of the measurement process.

According to this mode, in the case of testing a prescribed area on the object surface, a measurement process and a determination process are executed after extraction of a characteristic showing an area to be tested from the one-dimensional information reflecting the normal vector or the reflectivity, whereby it is possible to execute accurate testing.

Next, an image processor according to the present invention serves to execute the first image processing method, and comprises: an image pickup means for picking up an image of a prescribed object from a fixed direction; at least three illuminating means for illuminating the object from respectively different directions; an image generating means for generating a plurality of images by driving the image pickup means according to each lighting timing while sequentially lighting the illuminating means one by one; a calculating means for executing a process for acquiring a normal vector against the object surface for each pixel in a corresponding relation among the plurality of images by use of the brightness of the respective pixels, and a process for obtaining one-dimensional information representing a relation of the normal vector with a space including the object; an image data generating means for generating image data which makes the one-dimensional information, obtained by the calculating means for each pixel, correspond to a coordinate of each pixel; and a characteristic extracting means for executing a prescribed characteristic extracting process on the image data generated by the image data generating means.

In the above, each of the means except for the image pickup means and the illuminating means is comprised, for example, of a computer which stores a program. However, the configuration of those means is not limited to this, but may be comp. For example, part of the means may be comprised of a dedicated circuit. Further, in the case of using the computer, the means may be comprised of a combination of a plurality of computers.

In one mode of the image processor, in the image pickup means, the same number of image pickup elements as the number of the illuminating means are disposed while having a relation capable of picking up an image of the same one field of view. For example, a light axis of a camera lens may be divided into a plurality of axes by a spectral means such as a half mirror or a prism, and an image pickup element may be installed on each axis. Further, the image data generating means drives the image pickup elements one by one according to the timing for lighting the illuminating means to perform image pickup, and makes each image pickup element simultaneously output an image signal after completion of image pickup by a final image pickup element.

According to the above mode, any one pickup element is driven to execute the image pickup process every time the illuminating means is lighted, and outputting an image signal is held until completion of image pickup in the final pickup element. Therefore, even when a moving body is an object to be measured, the object to be measured is made to stand still for a given short time to generate an image necessary for measurement. Further, when positional displacement at every image pickup timing falls within a range of the resolution of the image pickup element, it is possible to perform image pickup while moving the object to be measured.

Further, another mode of the image processor comprises: a measuring means for executing a prescribed measurement process with regard to the characteristic extracted by the characteristic extracting means; a determining means for determining whether or not the surface state of the object is appropriate on the basis of the result of the measurement process; and an output means for outputting the result of determination made by the determining means. Namely, the image processor according to this mode is considered to function as a testing unit for testing a surface state of a prescribed object.

According to the present invention, after a normal vector or a reflectivity of the surface of an object is obtained, one-dimensional information reflecting the measurement result is obtained, and image data is generated according to this one-dimensional information to extract a characteristic by means of two-dimensional image processing, whereby it is possible to accurately extract an area to be detected without detailed adjustment of an illumination condition. Further, the same algorithm as in the conventional two-dimensional image processing can be applied, whereby it is possible to suppress a capacity of data to be processed and further to utilize a software resource used in the two-dimensional image processing, so as to substantially reduce cost in manufacturing of the processor.

BRIEF DESCRIPTION OF THE DRAWINGS

FIG. 1 shows an oblique view of a configuration of an image pickup portion of an image processor according to the present invention;
FIG. 2 shows an explanatory view of examples of images generated by the image pickup section of FIG. 1;
FIGS. 3A and 3B shows an explanatory view of parameters, which are necessary for calculation of a normal vector, correspondingly to the configuration of the image pickup section;
FIG. 4 shows an explanatory view of an example of one-dimensional information to be used for a normal vector image;
FIG. 5 shows an explanatory view of an example of measuring a cylindrical work;

FIG. 6 shows an explanatory view of an example of a normal vector image obtained in the set state of FIG. 5;

FIG. 7 shows an explanatory view of another example of one-dimensional information to be used for a normal vector image;

FIG. 8 shows an explanatory view of another example of one-dimensional information to be used for a normal vector image;

FIG. 9 shows an explanatory view of an example of measuring a work that has letters processed by embossing;

FIG. 10 shows an explanatory view of normal vectors on the letter on the work of FIG 9;

FIG. 11 shows an explanatory view of an example of generating a normal vector image by means of an angle $\theta$ of FIG. 8 in a region R of the work of FIG. 9;

FIG. 12 shows an explanatory view of an example of measuring a work that has a depression;

FIG. 13 shows an explanatory view of normal vectors on the work of FIG. 12;

FIG. 14 shows an explanatory view of an example of generating a normal vector image of the work of FIG. 12 by means of an angle $\varphi$ of FIG. 8;

FIG. 15 shows an explanatory view of an example of measuring a work to which a transparent tape is attached;

FIGS. 16A and 16B shows an explanatory view of the work of FIG. 15, comparing a variable-density image with a reflectivity image;

FIG. 17 shows an explanatory view of a configuration of a camera;

FIG. 18 shows a block diagram of a configuration of an image processor;

FIG. 19 shows a timing chart of control over the camera and light sources; and

FIG. 20 shows a flowchart in the case of performing testing on a work.

DETAILED DESCRIPTION OF THE PREFERRED EMBODIMENTS

(A) Configuration and basic principle of image pickup section

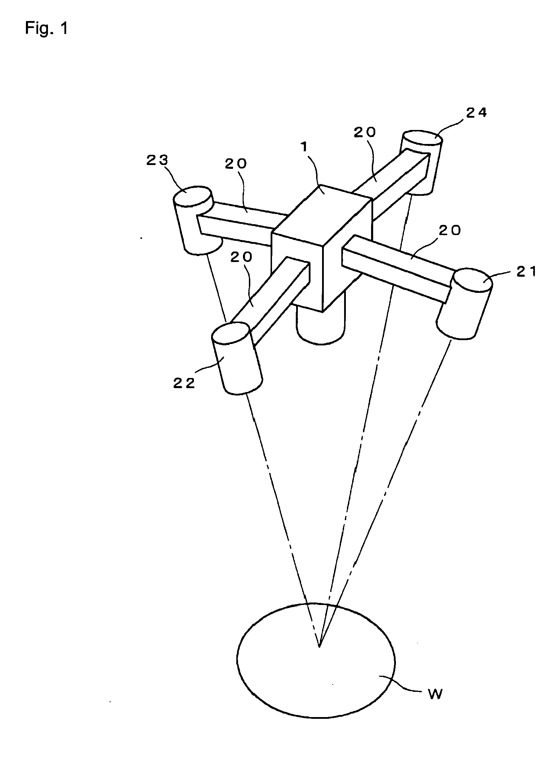

FIG. 1 shows a constitutional example of an image pickup section for use in an image processor according to the present invention.

An image pickup section of the present embodiment is configured by integration of a camera 1 for image generation with four light sources 21, 22, 23, 24. A body section of the camera 1 is formed in the rectangular parallelepiped shape, and arranged in a state where light axes are vertically directed. The light sources 21 to 24 are fitted on the respective side surfaces of the camera 1 via arm sections 20 each having a prescribed length. Further, all the light sources 21 to 24 are fitted with the light axes diagonally downwardly directed so as to illuminate a region whose image is to be picked up by the camera 1. Further, the lengths and angles of inclination of the arm sections 20 are uniformed so that the distances between the light sources 21 to 24 and a supporting surface of a work W or the light axes of the camera 1 are the same.

In the example of FIG. 1, a spherical work W is an object to be measured, and the camera 1 is disposed immediately above the work W. The light sources 21 to 24 are sequentially lighted one by one according to trigger signals from a later-described controller 3. The camera is activated every time one of the light sources 21 to 24 is lighted to pick up an image of the work W

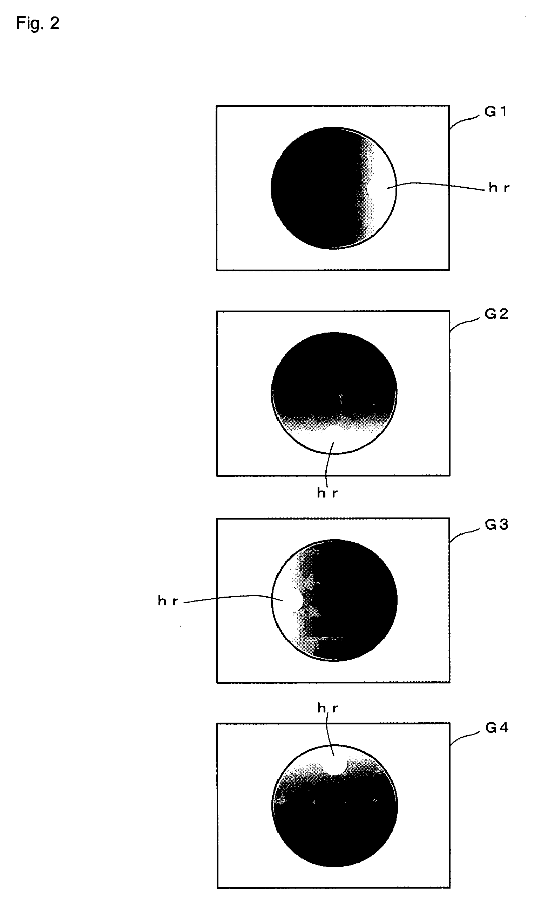

FIG. 2 shows four variable-density images (hereinafter simply referred to as "images") of the work W generated by the image pickup section 1. In the figure, symbol G1 denotes an image generated in a state where the light source 21 stays lighted. Symbol G2 denotes an image generated in a state where the light source 22 stays lighted. Symbol G3 denotes an image generated in a state where the light source 23 stays lighted. Symbol G4 denotes an image generated in a state where the light source 24 stays lighted. In any of the images, a variable-density distribution appears that reflects the state of illumination by the lighted light source. In addition, any of the images G1 to G4 includes a region hr where the brightness is saturated due to incidence of a specularly reflected light.

In the image processor of the present embodiment, the image pickup is performed four times with the work W in a still state as thus described, so as to reflect each point on the work W to the same coordinate of the images G1 to G4. Among the images G1 to G4, pixels having the same coordinate are combined to form a group, and by use of an illumination direction vector determined from the brightness (gradation) of the pixels belonging to the group and the position of the light source, a normal vector at one point on the work W, which corresponds to the pixel group, is calculated.

Further, in the present embodiment, the calculated normal vector is converted into one-dimensional information, and an image where the information after the conversion is corresponded to a coordinate of the pixel group is generated (thereinafter, this image is referred to as "normal vector image"). By processing this normal vector image, a process of detecting a prescribed pattern on the work W, a process of determining the presence or absence of a defect, and some other processes are performed.

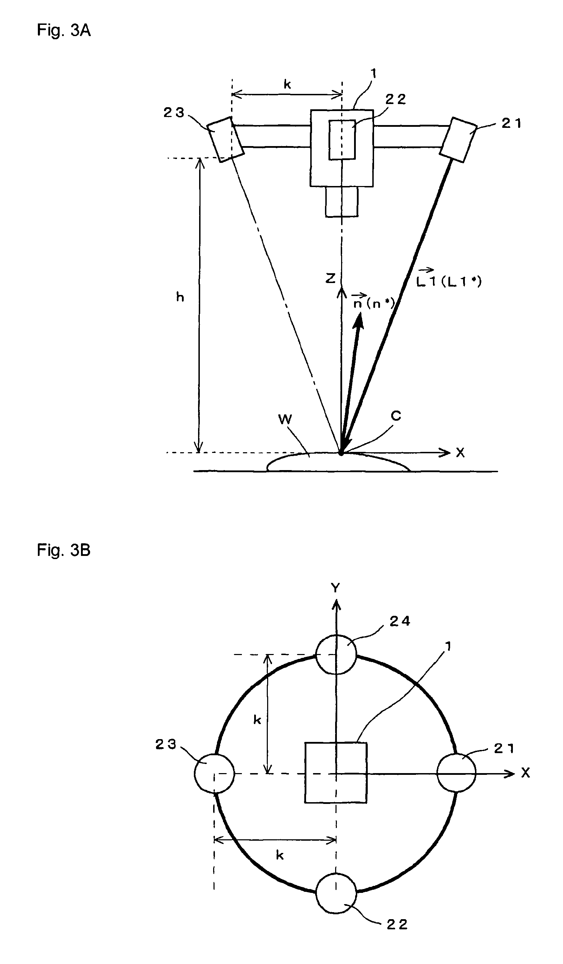

FIGS. 3A and 3B shows parameters necessary for obtaining a normal vector n* at a prescribed point C on the work W. It is to be noted that FIG 3A shows part of the spherical work W.

In this example, a space coordinate system is set such that the light axis of the camera 1 is set on the Z-axis, and the light sources 21, 23 are placed on the X-axis while the light sources 22, 24 are placed on the Y-axis. Further, the distance between the camera 1 and each of the light sources 21 to 24 is k, and the height of the light source with the point C taken as a reference is h. In addition, k can be obtained from the length of the arm section 20, and h can be obtained using the distance between the supporting surface of the work W and the camera 1.

In the above, provided that the normal vector at the point C is n*, each illumination direction vector of the light sources 21 to 24 is Lm*(m = 1 to 4), the distance from each of the light sources 21 to 24 to the point C is Dm, the brightness at the point C in each of the images G1 to G4 is Im, and the reflectivity of the work W is R, the inner product of the vectors Im* and n* can be expressed by the following expression (3). It is to be noted that this expression (3) is practically equivalent to the above-mentioned expressions (1) and (2).

$$Lm^* \bullet n^* = (Im \bullet Dm^2) / R \qquad \ldots (3)$$

Since it is considered that the x-axis and y-axis that define the two-dimensional coordinate system of the image respectively correspond to the X-axis and the Y-axis of the space coordinate system, when the coordinate of the point C on the image is (x, y), the respective illumination direction vectors Lm* of the light sources 21 to 24 corresponding to the point C are (a) to (d) below.

$$L1^* = (k \bullet x, y, h) \qquad \ldots (a)$$

$$L2^* = (x, k \bullet y, h) \qquad \ldots (b)$$

$$L3^* = (-k \bullet x, y, h) \qquad \ldots (c)$$

$$L4^* = (x, -k \bullet y, h) \qquad \ldots (d)$$

Further, since corresponding to the length of the illumination direction vectors Lm, the distance Dm can be obtained from the above vector components. Further, the brightness Im can be obtained from each of the images G1 to G4.

It is to be noted that the height h is not a fixed value in a strict sense since the Z coordinate of the point C changes depending upon the position of the point C. However, when the width of displacement of the work W in the field of view of the camera 1 is within a prescribed acceptable value, for example, the respective distances from a plurality of points on the work W to the light sources 21 to 24 may be obtained and an average value of those distances may be fixed as the value of h. Therefore, Lm*, Dm and Im are known among the parameters in the expression (3).

According to the above expression (3), it is considered that a ratio of the internal product n* •Lm* among the light sources is equivalent to the ratio of Im • Dm$^2$. Further, in the expression (3), although the reflectivity R as well as the normal vector n* is unknown, a ratio among the components nX, nY, nZ of the normal vector n* may be made apparent to specify this vector. Therefore, by extracting the brightness Im of the point C from images corresponding to at least three light sources, it is possible to obtain the components nX, nY, nZ of the normal vector n*.

However, since the surface of the actual work W is not a complete diffusion surface and a reflected light from that surface includes a specularly reflected light, an image including the region hr where the brightness is saturated due to the specularly reflected light might be generated, as shown in FIG. 2.

Therefore, in the present embodiment, the brightness I1, I2, I3, I4 of the point C are respectively extracted from the four images G1 to G4, and thereafter, three brightness are extracted out of numeric values shown by the I1 to 14 in the ascending order, to obtain the normal vector n*.

(B) Concrete example of normal vector image

In the following described are kinds of one-dimensional information obtained from normal vectors, and examples of normal vector images formed by those one-dimensional information as well as examples of measurement using the normal vector images.

(i) First Embodiment

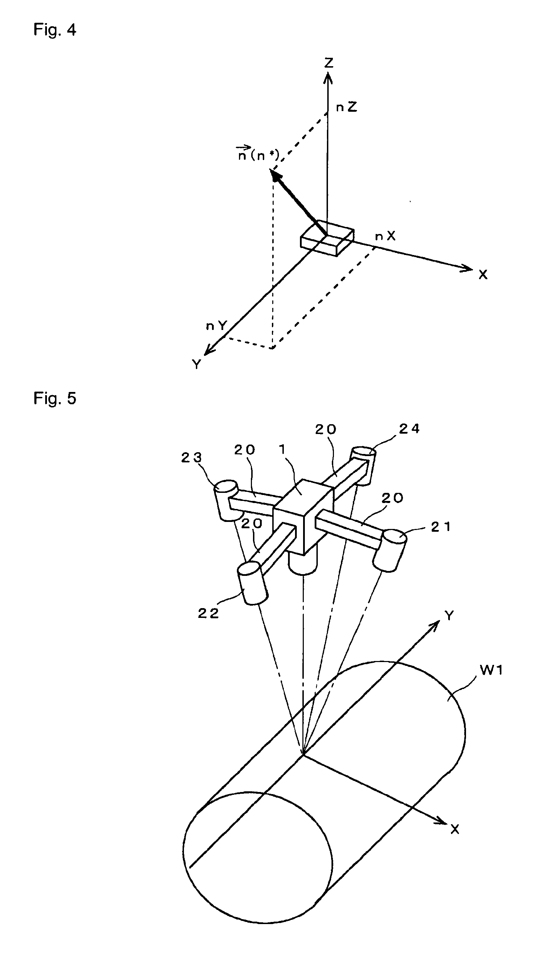

In the present embodiment, as shown in FIG. 4, one out of the three components nX, nY, nZ of the normal vector n* is used as the one-dimensional information. This one-dimensional information is useful in extracting inclination of the surface work along any of the axes X, Y, Z.

For example, as shown in FIG. 5, when the X-axis is set in a direction along a width direction of a cylindrical work W1, the Y-axis is set in a direction along a length direction of the work W1, and the Z-axis is set in a direction along a height direction of the work W1 with respect to the work W1, it is possible to obtain an image reflecting a change in inclination angle of the surface of the work W1 by setting the component nX of the X-axis of the normal vector n* as the one-dimensional information.

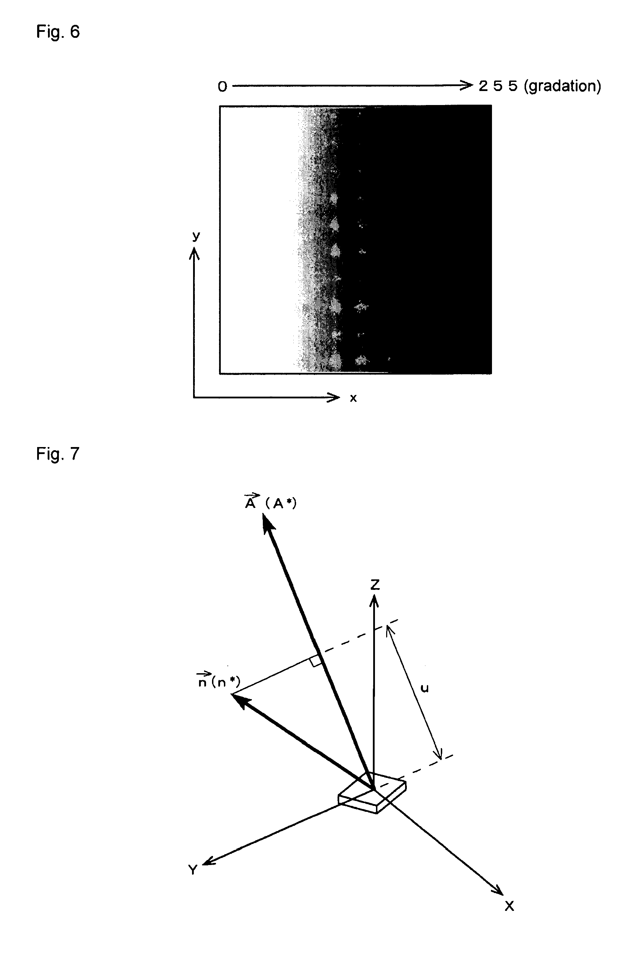

FIG. 6 shows an image generated by the component nX in the X-axis direction in the setting example of FIG. 5. It is to be noted that also in the present embodiment, the camera 1 and the light sources 21, 22 are arranged in the same positional relation as shown in FIG. 3 above, to make the x-axis of the x-y coordinate system of the image correspond to the X-axis of the space coordinate system, and the y-axis correspond to the direction of the Y-axis of the space coordinate system. (This setting also applies to the following embodiments.) Further, an image to be displayed has an eight-bit configuration. Namely, the image is represented with 0 to 255-step gradation, and is in the brightest state when represented with 0-step gradation.

In the present embodiment, the maximum value of the X-axis component nX is previously obtained by using the model of the work W1 or some other means, and then the gradation corresponding to each nX value is adjusted such that the 255-step gradation corresponds to the maximum value and 0-step gradation corresponds to the minimum value (reflecting a component that appeared in the negative direction of the X-axis). As a result, an image is generated which becomes darker along the direction from left to right (the positive direction of the x-axis). Such an image is generated because the normal vector on the cylindrical work W1 is almost vertical at the highest portion seen from the supporting surface, and is inclined to the positive or negative direction of the X-axis as getting away from the highest portion.

As thus described, when the inclination of the work surface changes along the X-axis direction, it is possible to clearly represent the state of the change in inclination by taking out the X-axis component nX of the normal vector n* as the one-dimensional information and forming its image. Further, in such a case where the work has been transformed, the change in density along the X-axis of the image differs from normal, thereby allowing accurate determination as to whether or not the work has been transformed.

For the same purpose as above, any of nX, nY and nZ can be selected as the one-dimensional information according to the direction of a change in inclination of the work surface, to generate an image accurately reflecting the state of the change in inclination. Further, as the spherical work as thus described, when the change in inclination occurs in a plurality of directions, two or more components (nX and nY in the case of the spherical work) can be used as the one-dimensional information. In this case, although a variable-density image may be generated for each component, a colored image may also be generated where nX has been replaced with a red component R and nY with a blue component B. Or, an image may be generated where nX has been replaced with lightness and nY with color saturation. Or, a normal vector image with such colors may be displayed.

(ii) Second Embodiment

In the present embodiment, as shown in FIG. 7, a direction shown by an arbitrary vector A* of the space coordinate system is considered as a reference direction, and the length U of a projection pattern obtained when a normal vector n* is projected in the reference direction is used as the one-dimensional information.

The one-dimensional information U can be used for example for a process of detecting a region the inclination of which against the X-Y plane is in a prescribed angle range out of regions on the surface of the work W. For example, the one-dimensional information U of each pixel is obtained with the normal line direction of the level plane having a reference inclination taken as the vector A*, and an assembly of pixels with the U values exceeding a prescribed threshold can be detected as a target region.

It is to be noted that the one-dimensional information U can be obtained such that the vector A* is taken as a unit vector and an internal project of the unit vector and the normal vector n* is obtained.

(iii) Third Embodiment

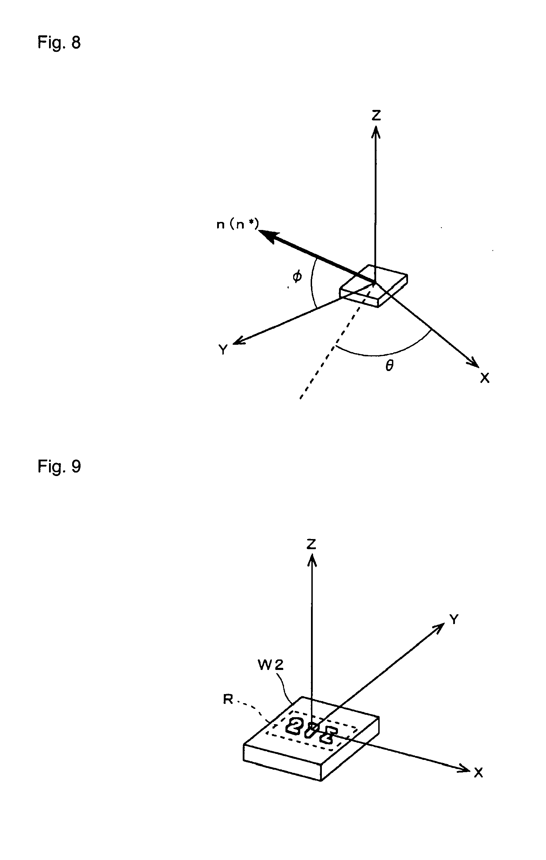

FIG. 8 shows an example of obtaining angle information on the normal vector n* as one-dimensional information. In the present embodiment, an angle θ of the normal vector n* against the X-Y plane and an angle φ of the normal vector n* against the Y-Z plane are obtained. It should be noted that the angle θ is obtained as an angle of a projection pattern against the X-axis when the normal vector n* is projected onto the X-Y plane, and the angle φ is obtained as an angle of a projection pattern against the Y-axis when the normal vector n* is projected onto the Y-Z plane.

The angle θ is considered to represent the direction of the normal vector n* when the vector is seen from the top, i.e., the direction of the normal vector n* having been projected onto the X-Y plane. The other angle φ is considered to represent the openness degree of the normal vector n* against the level.plane (X-Y plane).

Also in the case of using the above angle information as one-dimensional information, it is desirable to select either of the angles θ or φ according to the shapes of the work and the area to be detected, and the like.
For example, as shown in FIG. 9, in a case of detecting a letter string embossed on the surface of a tabular work W2, selection of the angle θ enables generation of a normal vector image reflecting a characteristic of the letters. In addition, in the example of FIG. 9, the X-axis is set in the breadth direction of the work W2 (corresponding to the line direction of the letter string), the Y-axis is set in the length direction, and the Z-axis is set in the height direction. Further, symbol R in the figure denotes a region including the letter string to be detected.

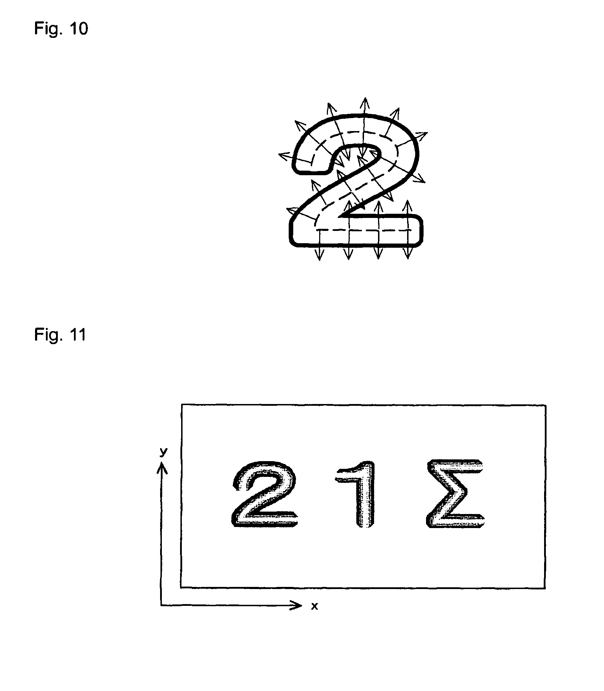

FIG. 10 shows an example of a normal vector against one letter (number "2") put down on the work W2, seen from the top. It is considered that, since the center part of this letter shown by the dotted line is the peak and the letter is inclined toward the edges, normal vectors appear in the directions shown by the arrows in the figure.

FIG. 11 shows an image generated by the angle θ extracted from the normal vectors in the region R of FIG. 9. In the present embodiment, adjustment is made such that the gradation is zero when the angle θ is 0 degree and the gradation becomes larger as the absolute value of the angle θ becomes larger. This makes the peak portion of each letter bright and the other portions become darker from the peak toward the edges. Further, in the background portion of the letter string, the angle θ is zero degree since the normal vector is vertically directed, and hence the background portion is displayed in a bright state.

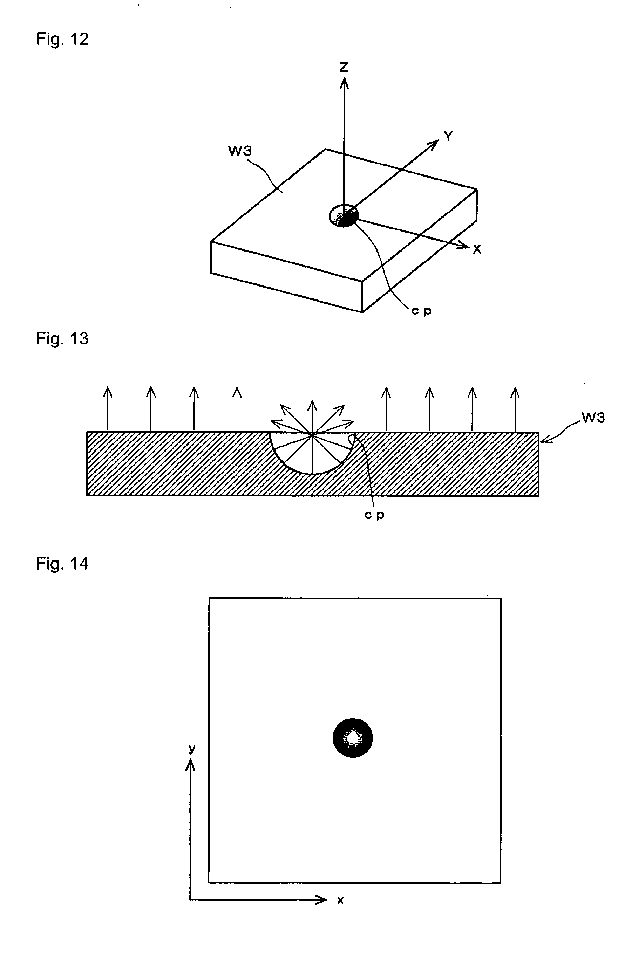

On the other hand, in a case where a tubular work W3 with a depression cp formed on the surface is an object and the depression is to be detected as shown in FIG. 12, selection of the angle φ enables generation of a normal vector image where the position and size of the depression cp are clear.

FIG. 13 represents normal vectors on the work W3 by use of a vertical section at a position corresponding to the depression cp.
The directions of the normal vectors at a flat portion of the work W3 are almost vertical. In the depression cp, the direction of the normal vector from the bottom is also vertical since the bottom is almost flat, but the directions of the normal vectors on the inclined surfaces from the bottom toward the edge reflect the inclined states of those surfaces. Further, the inclination angle of the inclined surface comes closer to that of the vertical surface as the surface comes closer to the edge from the bottom, and therefore, the normal vector on the inclined surface closer to the edge comes closer to the direction along the level plane.

FIG. 14 shows an image generated by the angle φ extracted from the normal vector. In the present embodiment, since the gradation is set such that the image is brightest (gradation: 0) at the angle φ of 90 degrees and the image becomes darker as the value of $|90° - φ|$ becomes larger, the flat surface is brightly displayed whereas the inclined surface of the depression is darkly displayed.

In either of the images shown in FIGS. 11 and 14, since the object to be detected (letter string, depression) is displayed with different brightness from that of the background, it is possible to perform accurate detection by the binarization process, the edge extraction process or the like. Further, when an edge shape of a letter is complex as in the example of FIG. 11, a model pattern may be previously registered, and the matching process such as normalized correlation calculation may be performed.

(C) Reflectivity image

Although the normal vector image was used to allow detection of the object to be measured in the above embodiments, instead of this, an image may be generated by means of the reflectivity R of the work (hereinafter, this image is referred to as "reflectivity image").
It is to be noted that the reflectivity R can be obtained by obtaining the components nX, nY, nZ of the normal vector n* and then applying the components into the foregoing expression (3) set for any one of the light sources 21 to 24.

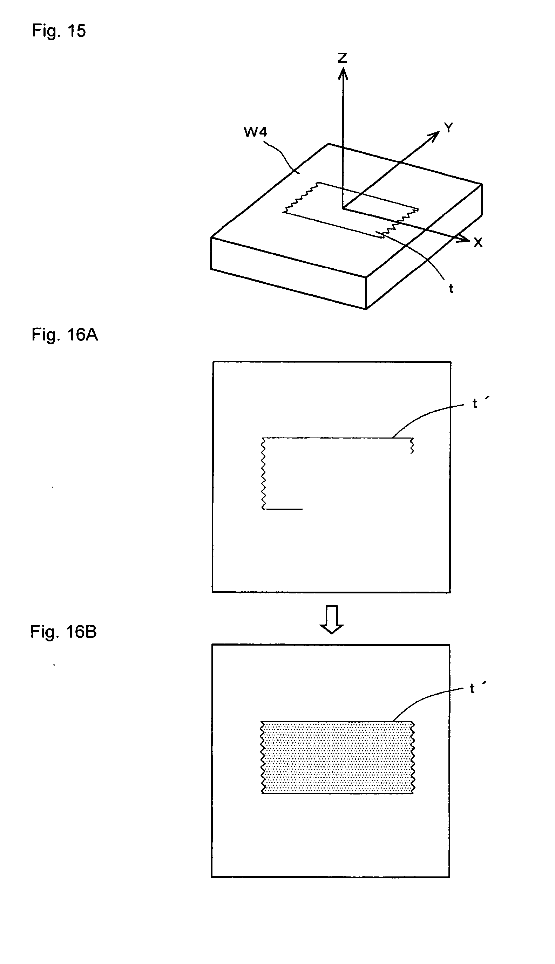

The process using this reflectivity image exerts an effect especially when an object with a large specular reflectivity is an object to be detected.
For example, as shown in FIG. 15, in the case of performing a process of detecting a transparent tape t attached to the surface of a work W4, when the specularly reflected light from the tape t becomes large, it might be difficult to recognize the whole image of the tape t in a normal image.

FIG. 16A is an example of an image of the work W4 generated by the camera 1. In this image, since the specularly reflected light from the tape t is incident on the camera 1, brightness of part of a tape t' on the image has become saturated, and the whole image of the transparent tape has come into an unidentifiable state.
On the other hand, FIG. 16(2) shows a reflectivity image corresponding to the above image. In the present embodiment, the transparent tape t' appears as a darker region than the background portion by setting the gradation such that the higher the reflectivity R, the darker the image.

As thus described, even a shape of an object, which is difficult to visually recognize in an original image due to the specular reflection component, appears sufficiently clearly in a reflectivity image. Therefore, also in this case, it is possible to accurately detect the object by the method such as the binarization process, the edge extraction process, the pattern matching process, the variable-density data injection process, or the like.

(D) Configuration of image processor

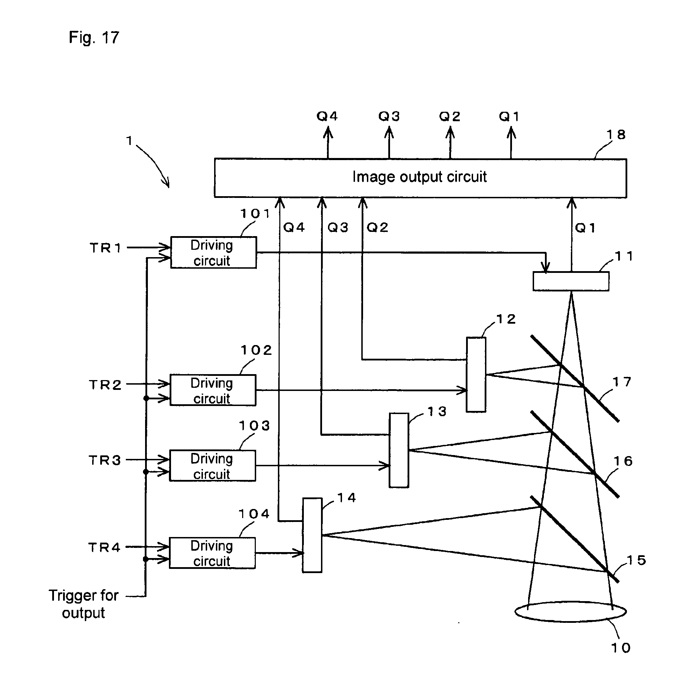

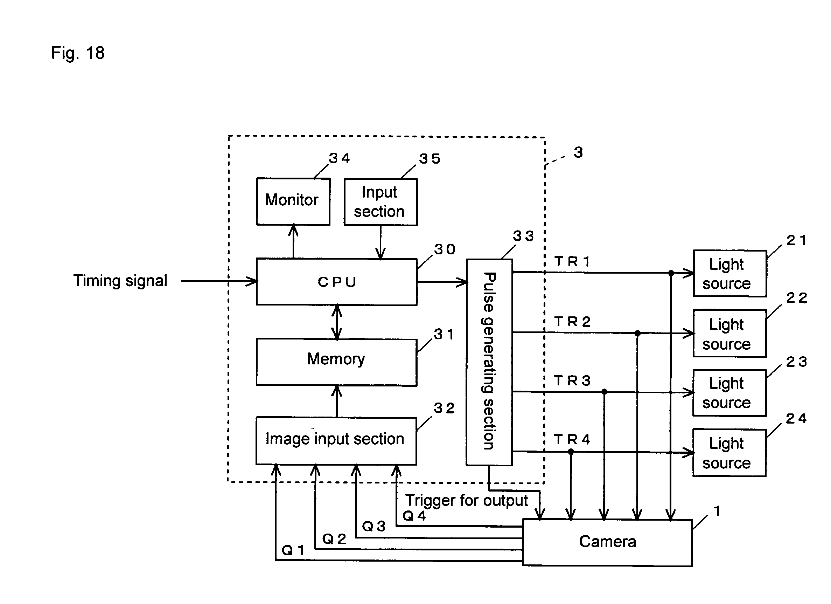

FIG. 17 shows a detailed configuration of the camera 1.
In this camera 1, four CCDs 11, 12, 13, and 14 and four driving circuits 101, 102, 103, and 104 installed in each of the CCDs are incorporated. Further, three spectral means (half mirror, etc.) 15, 16, and 17 are provided on a light axis of a camera lens 10, and four axes split by the spectral means 15 to 17 are respectively provided with the CCDs 11 to 14.
Further, the camera 1 is provided with an image output circuit 18. The image output circuit 18 receives image signals Q1, Q2, Q3, and Q4 respectively from the CCDs 11, 12, 13, and 14, and parallelly outputs these signals to a later-described controller 3.
Dedicated trigger signals TR1, TR2, TR3, and TR4 and a trigger for output which is common to each of the driving circuits 101 to 104 are inputted from the controller 3 into the driving circuits 101 to 104. The driving circuits 101 to 104 drive the CCDs 11 to 14 that respond according to inputs of the trigger signals TR1 to TR4, to perform an image pickup process (charge storage into each cell). Further, when the trigger for output is inputted, the image signals Q1, Q2, Q3, and Q4 generated by the charge storage are released to the CCDs 11 to 14
FIG. 18 shows the whole electrical configuration of the image processor.
This image processor includes the controller 3 in addition to the camera 1 and the light sources 21 to 24. The controller 3 generates a normal vector image by use of four image signals Q1 to Q4 inputted from the camera 1 and executes measurement process using the normal vector image, while controlling operations of the camera 1 and the light sources 21 to 24. Further, the controller 3 is capable of executing a process for determining whether or not the work is defective by use of the measurement result.
Specifically, the controller 3 includes a CPU 30, a memory 31, an image inputting section 32, a pulse generating section 33, a monitor 34, an input section 35, and the like. In addition, the memory 31 of the present embodiment is configured under the concept that large capacity memories such as an ROM, an RAM and a hard disk, are included, and stores programs necessary for the measurement process and the determination process.
Further, an area for separately storing an input image, the normal vector image, the reflectivity image, and the like is set in the memory 31. Moreover, parameters necessary for specification of an illumination direction vector Lm* of each of the light sources 21 to 24, such as h and k shown in FIG 3, are previously registered in the memory 31.
The image inputting section 32 includes an interface circuit and an A/D conversion circuit with respect to the image signals Q1 to Q4 from the camera 1. An image formed by each of the image signals Q1 to Q4 is digital converted in the A/D conversion circuit in the image inputting section 32, and then stored into the memory 31. Further, the image signals Q1 to Q4, the normal vector image and the reflectivity image can be displayed on the monitor 34.
Upon receipt of input of a detection signal ("timing signal" in the figure) from a sensor for work detection (not shown), the CPU 30 issues a command to output a trigger signal to the pulse generating section 33. In the pulse generating section 33, a clock signal has been inputted from the CPU 30 separately from the above output command. In response to the output command, the pulse generating section 33 outputs trigger signals TR1, TR2, TR3, and TR4 and a trigger for output in this order at each of prescribed time intervals.
Of the outputted trigger signals TR1 to TR4, the signal TR1 is given to the light source 21 and the driving circuit 101 of the camera 1, the signal TR2 is given to the light source 22 and the driving circuit 102, the signal TR3 is given to the light source 23 and the driving circuit 103, and the signal TR4 is given to the light source 24 and the driving circuit 104. Thereby, the CCDs 11 to 14 are activated respectively when the light sources 21 to 24 are lighted, to generate images G1, G2, G3, G4 shown in FIG. 2 as described above.

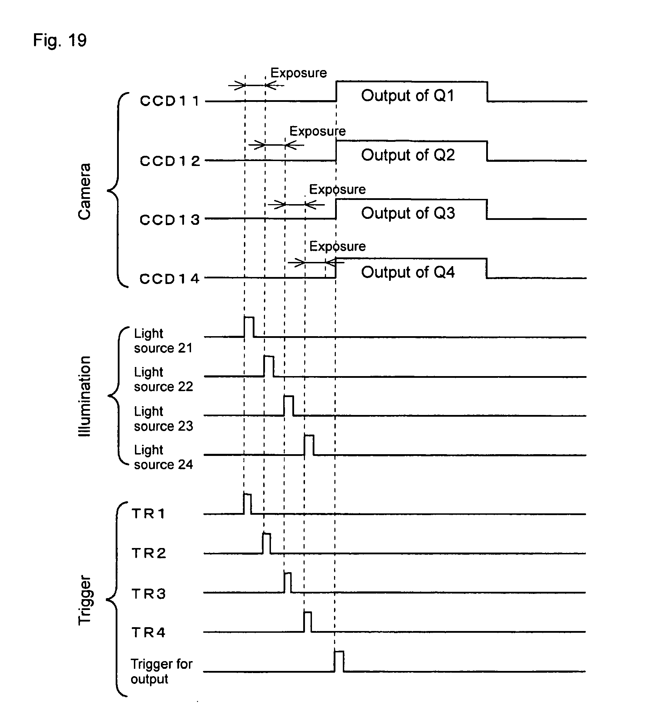

FIG. 19 shows operating states of the camera 1 and the light sources 21 to 24 under control of the controller 3. In the present embodiment, the trigger signals TR1 to TR4 and the trigger for output are generated at time intervals corresponding to exposure periods of the CCDs 11 to 14, thereby making the CCDs 11 to 14 continuously execute image pickup to simultaneously output the image signals Q1 to Q4 after the image pickup.
For obtaining a normal vector, it is necessary to stop the work and then pick up an image of the work so that the one point in each of four images is corresponded to one another. However, when there is one CCD in use, a generated image needs to be outputted after every image pickup before next image pick up is performed. In this case, the time for stopping the work is naturally long.
As opposed to this, according to the configuration and the control shown in FIGS. 16 to 18, images from the CCDs 11 to 14 can be outputted later, thereby allowing substantial reduction in time for stopping the work.
Accordingly, sufficient processing can be performed even in a worksite where a number of works are continuously sent, such as a testing line in a factory. In addition, when the time for exposing the CCDs 11 to 14 is extremely short, the image pickup may be performed without stopping the work.

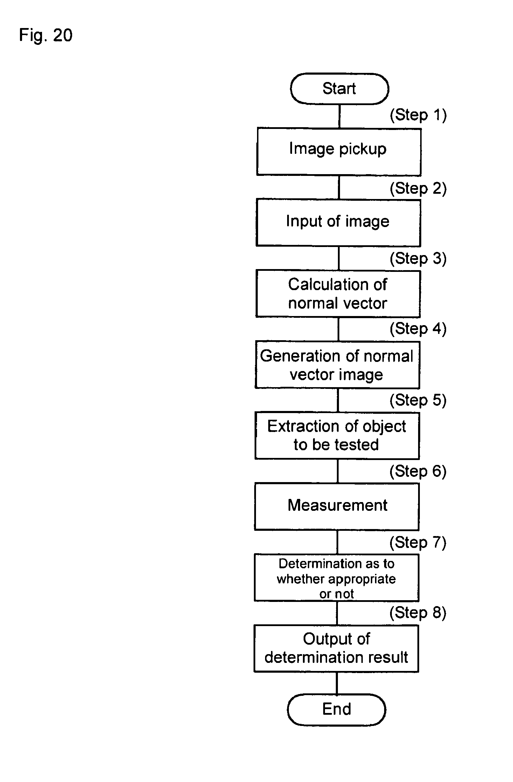

Finally, in a case where an image processor with the above-mentioned configuration is installed on a testing line in a factory to perform testing, the flow of a process to be executed by the controller 3 is described using FIG. 20. This FIG. 20 shows a procedure for the process to be executed on the camera 1. The process is started in response to input of a timing signal. In first Step 1, using the pulse generating section 33, the trigger signals TR1 to TR4 are given to the CCDs 11 to 14 and the light sources 21 to 24 in this order. Thereby, the light sources 21 to 24 are sequentially lighted and the CCDs 11 to 14 are driven upon each lighting to generate the images G1 to G4 under lighting by the light sources 21 to 24, respectively.

In next Step 2, the trigger for output is given to the camera 1, to output the image signals Q1 to Q4 from the CCDs 11 to 14, respectively. Images formed by these image signals Q1 to Q4 are digital converted at the image inputting section 32 and then inputted into the memory 31.

In Step 3, using the four inputted images, a normal vector of each corresponding pixel group is calculated. Subsequently, in Step 4, the normal vector image is generated. However, depending upon a measurement purpose, the reflectivity R may be obtained after calculation of the normal vector, to generate the reflectivity image.

In Step 5, using the normal vector image generated in Step 4 above, an object to be tested is detected. For example, in the case of testing whether or not the depression cp has been formed in the work W3 of FIG. 12, the binarization process is performed to detect a region where the density is not larger than a prescribed value. Further, in the case of testing the letter string on the work W2 of FIG. 9, the pattern match process can be performed in addition to the binarization process and the edge extraction process.

However, the process executed in Step 5 is not limited to the above. A variety of kinds of know-how accumulated in the conventional variable-density image processing can be applied so as to execute an accurate detection process.

In Step 6, the gravity, the area and the like of the detected object are measured. Further, in Step 7, whether or not the work is applicable is determined by comparing the measured values obtained in Step 6 with previously set determination reference values, or some other means. In final Step 8, the determination result of Step 7 is outputted to an external device and the like.

According to the process of FIG. 20, since the normal vector image or the reflectivity image is generated which clarifies the characteristic of the object to be tested, it is possible to generate an image representing a characteristic of an object to be tested without detailed adjustment of an illumination condition, so as to perform an accurate process of detecting the object on the image.

Further, since a normal vector as three-dimensional data is converted into one-dimensional data and a two-dimensional image formed on the basis of the information after such conversion is processed, a recognition process using the normal vector can be facilitated. Furthermore, since algorithm developed in the conventional variable-density image processing is applicable, the software resource can be effectively utilized.

**Claims**

1. An image processing method, in which a process for picking up an image of an object from a fixed direction is executed at least three times while the direction of illumination against the object is changed, to obtain a normal vector with respect to the object surface by means of a plurality of images obtained by the respective image pickups, and subsequently, a prescribed process is executed using the normal vector thus obtained, the method comprising:

    a first step of executing a process for obtaining the normal vector of each group of pixels in a corresponding relation among the plurality of images by use of the brightness of the respective pixels, and a process for obtaining one-dimensional information representing a relation of the normal vector with respect to a space including the object;
    a second step of generating image data which makes the one-dimensional information, obtained for each pixel in the first step, correspond to a coordinate of each pixel; and
    a third step of executing a prescribed characteristic extracting process on the image data generated in the second step.

2. The image processing method according to claim 1,
   wherein the length of a projection pattern in projecting the normal vector in an arbitrary direction within the space is obtained as the one-dimensional information.

3. The image processing method according to claim 1,
   wherein an angle formed by the normal vector against an arbitrary vector within the space is obtained as the one-dimensional information.

**4.** The image processing method according to any one of claims 1 to 3,
wherein the method executes a step of displaying an image on the basis of the image data generated in the second step.

**5.** The image processing method according to claim 4, wherein
a plurality of kinds of the one-dimensional information are obtained, and in the second step, image data of each of the one-dimensional information is generated, and
in the step of displaying an image, an image is displayed where the image data of the one-dimensional information are respectively reflected in different components.

**6.** An image processing method, in which a process for picking up an image of an object from a fixed direction is executed at least three times while the direction of illumination against the object is changed, to obtain a reflectivity of the object surface by means of a plurality of images obtained by the respective image pickups, and subsequently, a prescribed process is executed using the reflectivity thus obtained, the method comprising:

a first step of executing a process for obtaining the reflectivity of the object for each group of pixels in a corresponding relation among the plurality of images by use of the brightness of the respective pixels;
a second step of generating image data which makes the reflectivity, obtained in the first step for each pixel, correspond to a coordinate of each pixel; and
a third step of executing a prescribed characteristic extracting process on the image data generated in the second step.

**7.** The image processing method according to any one of claims 1 to 3,
wherein the method further executes:

a fourth step of executing a prescribed measurement process with regard to the characteristic extracted in the third step; and
a fifth step of determining the surface state of the object on the basis of the result of the measurement process.

**8.** An image processor, comprising:

an image pickup device for picking up an image of a prescribed object from a fixed direction;
at least three illuminating devices for illuminating the object from respectively different directions;
an image generating device for generating a plurality of images by driving the image pickup device according to each lighting timing while sequentially lighting the illuminating devices one by one;
a calculating device for executing a process for acquiring a normal vector against the object surface for each group of pixels in a corresponding relation among the plurality of images by use of the brightness of the respective pixels, and a process for obtaining one-dimensional information representing a relation of the normal vector with respect to a space including the object;
an image data generating device for generating image data which makes the one-dimensional information, obtained by the calculating device for each pixel, correspond to a coordinate of each pixel; and
a characteristic extracting device for executing a prescribed characteristic extracting process on the image data generated by the image data generating device.

**9.** The image processor according to claim 8, wherein,
In the image pickup device, the same number of image pickup elements as the number of the illuminating devices are disposed while having a relation capable of picking up the same one field of view, and
the image data generating device drives the image pickup elements one by one according to the timing for lighting the illuminating devices to perform image pickup, and makes each image pickup element simultaneously output an image signal after completion of image pickup by a final image pickup element.

**10.** The image processor according to claim 8 or 9, wherein the processor further comprises:

a measuring device for executing a prescribed measurement process with regard to the characteristic extracted by the characteristic extracting device;
a determining device for determining the surface state of the object on the basis of the result of the measurement process; and
an output device for outputting the result of determination made by the determining device.

Fig. 1

Fig. 2

Fig. 3A

Fig. 3B

Fig. 4

Fig. 5

Fig. 6

0 ⟶ 2 5 5 (gradation)

y

x

Fig. 7

$\vec{A}$ (A*)

Z

$\vec{n}$ (n*)

u

Y

X

Fig. 8

Fig. 9

Fig. 10

Fig. 11

Fig. 12

Fig. 13

Fig. 14

Fig. 15

Fig. 16A

Fig. 16B

Fig. 17

Fig. 18

Fig. 19

Fig. 20

```
                    ┌──────────┐
                    │  Start   │
                    └──────────┘
                         │      (Step 1)
                ┌─────────────────────┐
                │    Image pickup      │
                └─────────────────────┘
                         │      (Step 2)
                ┌─────────────────────┐
                │    Input of image    │
                └─────────────────────┘
                         │      (Step 3)
                ┌─────────────────────┐
                │    Calculation of    │
                │    normal vector     │
                └─────────────────────┘
                         │      (Step 4)
                ┌─────────────────────┐
                │ Generation of normal │
                │     vector image     │
                └─────────────────────┘
                         │      (Step 5)
                ┌─────────────────────┐
                │ Extraction of object │
                │     to be tested     │
                └─────────────────────┘
                         │      (Step 6)
                ┌─────────────────────┐
                │     Measurement      │
                └─────────────────────┘
                         │      (Step 7)
                ┌─────────────────────┐
                │  Determination as to │
                │ whether appropriate  │
                │       or not         │
                └─────────────────────┘
                         │      (Step 8)
                ┌─────────────────────┐
                │     Output of        │
                │ determination result │
                └─────────────────────┘
                         │
                    ┌──────────┐
                    │   End    │
                    └──────────┘
```

**European Patent Office**

**EUROPEAN SEARCH REPORT**

Application Number

EP 07 00 1922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 462 992 A (AGILENT TECHNOLOGIES INC [US]) 29 September 2004 (2004-09-29) * paragraphs [0012] - [0024], [0034] - [0043], [0056], [0057] * ----- | 1,3,6-8, 10 | INV. G06T7/00 G01C11/06 |
| X | DRBOHLAV O ET AL: "Unambiguous determination of shape from photometric stereo with unknown light sources" PROCEEDINGS OF THE EIGHT IEEE INTERNATIONAL CONFERENCE ON COMPUTER VISION. (ICCV). VANCOUVER, BRITISH COLUMBIA, CANADA, JULY 7 - 14, 2001, INTERNATIONAL CONFERENCE ON COMPUTER VISION, LOS ALAMITOS, CA : IEEE COMP. SOC, US, vol. VOL. 1 OF 2. CONF. 8, 7 July 2001 (2001-07-07), pages 581-586, XP010554033 ISBN: 0-7695-1143-0 * abstract; figure 5 * * section "1. Introduction", "4. Experiment" * * figure 5 * ----- | 1,2,4,5, 8,10 | |
| X | US 4 755 047 A (KATO MAKOTO [JP] ET AL) 5 July 1988 (1988-07-05) * abstract * * column 1, lines 16-22 * * column 2, lines 5-32 * * column 3, line 30 - column 4, line 4 * ----- | 6,7 | TECHNICAL FIELDS SEARCHED (IPC)<br><br>G06T G01C |

The present search report has been drawn up for all claims

| Place of search | Date of completion of the search | Examiner |
|---|---|---|
| Munich | 8 May 2007 | Eckert, Lars |

EPO FORM 1503 03.82 (P04C01)

## ANNEX TO THE EUROPEAN SEARCH REPORT
## ON EUROPEAN PATENT APPLICATION NO.

EP 07 00 1922

This annex lists the patent family members relating to the patent documents cited in  the above-mentioned European search report.
The members are as contained in the European Patent Office EDP file on
The European Patent Office is in no way liable for these particulars which are merely given for the purpose of information.

08-05-2007

| Patent document cited in search report | | Publication date | Patent family member(s) | | Publication date |
|---|---|---|---|---|---|
| EP 1462992 | A | 29-09-2004 | EP<br>US | 1775684 A1<br>2004184648 A1 | 18-04-2007<br>23-09-2004 |
| US 4755047 | A | 05-07-1988 | JP | 62082314 A | 15-04-1987 |

EPO FORM P0459

For more details about this annex : see Official Journal of the European Patent Office, No. 12/82